# FASCICULE DE BREVET EUROPEEN

(11) **EP 3 607 640 B1**
(45) Date de publication et mention de la délivrance du brevet: **27.03.2024**
(21) Numéro de dépôt: 18718606.9
(22) Date de dépôt: 03.04.2018
(51) Int. Cl.: H02K 1/276, H02K 7/14

(54) **ROTOR POUR MACHINE ÉLECTRIQUE À AIMANTS PERMANENTS INTERNES**
ROTOR FÜR ELEKTRISCHE MASCHINE MIT INTERNEN PERMANENTMAGNETEN
ROTOR FOR ELECTRIC MACHINE WITH INTERNAL PERMANENT MAGNETS

(30) Priorité: 03.04.2017 FR 1752831
(43) Date de publication de la demande: 12.02.2020
(73) Titulaire: Moving Magnet Technologies, 25000 Besançon (FR)
(72) Inventeur: TAVERNIER, Stéphane, 25770 Chemaudin et Vaux (FR); ANDRIEUX, Gaël, 2533 Evilard (CH); DOLISY, Bastien, 67210 Obernai (FR)
(74) Mandataire: IP Trust
(86) Numéro de dépôt international: PCT/FR2018/050824
(87) Numéro de publication internationale: WO 2018/185421

(56) Documents cités:
- EP-A1- 0 872 944
- EP-A1- 3 404 804
- EP-A2- 2 615 724
- DE-A1-102012 105 992
- JP-A- S58 151 858
- US-A1- 2013 088 111

## Description

### Domaine de l'invention

La présente invention concerne un rotor de machine électrique tournante synchrone sans balais à configuration d'aimants permanents internes (IPM). Les machines électriques à aimants permanents utilisent généralement des terres rares telles que le samarium et le néodyme, ayant une forte densité d'énergie et une excellente résistance structurelle.

Toutefois le prix de ces matières premières fluctue fortement et à tendance à augmenter en raison notamment de la rareté des lieux d'extraction de ces terres rares et des choix géopolitiques pouvant créer artificiellement des pénuries de ces matériaux. La mise en forme de tels aimants dans des configurations particulières, par exemple avec des formes cylindriques circulaires, impliquent ainsi des coûts de réalisation industrielle qui peuvent être importants.

Pour pallier à cette situation, le concept de moteur électrique à aimants permanents internes (IPM) s'est développé. Il consiste à insérer dans des cavités formées dans une culasse ferromagnétique des blocs d'aimants, présentant une géométrie plus économique à réaliser et à aimanter, permettant aussi l'utilisation d'un volume d'aimants plus important. L'utilisation d'aimants à moindre performance, tels de ferrites dures, peut aussi être envisagée du fait de ce volume accru.

De façon connue en soi, les machines électriques tournantes comportent un stator bobiné et un rotor solidaire d'un arbre. Le rotor est généralement solidaire d'un arbre menant et/ou mené et peut appartenir à une machine électrique tournante sous la forme d'un alternateur, d'un moteur électrique, ou d'une machine réversible pouvant fonctionner dans les deux modes.

Le stator est généralement monté dans un carter configuré pour porter l'arbre rotatif, par exemple par l'intermédiaire de roulements ou de paliers. Le stator comporte un corps, ou culasse, constitué par un empilage de tôles minces formant une couronne, dont la face intérieure est pourvue d'encoches ouvertes vers l'intérieur pour recevoir des enroulements de phase. Dans un bobinage de type ondulé réparti, les enroulements sont obtenus par exemple à partir d'un fil continu recouvert d'émail ou à partir d'éléments conducteurs en forme d'épingles reliées entre elles par soudage.

Alternativement, dans un bobinage de type "concentrique", les enroulements de phase sont constitués par des bobines fermées sur elles-mêmes qui sont enroulées autour des dents du stator. La protection entre le paquet de tôles et le fil de bobinage est assurée soit par un isolant de type papier, soit par du plastique par surmoulage ou au moyen d'une pièce rapportée. Ces enroulements sont des enroulements polyphasés connectés en étoile ou en triangle dont les sorties sont reliées à un onduleur.

Par ailleurs, le rotor est constitué par un corps formé par un empilage de feuilles de tôles maintenues sous forme de paquet au moyen d'un système de fixation adapté, tel que des rivets traversant axialement le rotor de part en part, ou avec des agrafes ou avec des boutons ou encore des solutions de collage. Le rotor comporte des pôles formés par des aimants permanents logés dans des cavités ménagées dans le corps du rotor.

On connaît des machines électriques tournantes accouplées à un arbre d'un turbocompresseur («electric supercharger» en anglais). Ce turbocompresseur électrique permet de compenser au moins en partie la perte de puissance des moteurs thermiques de cylindrée réduite utilisés sur de nombreux véhicules automobiles pour en diminuer la consommation et les émissions de particules polluantes (principe dit de "downsizing" an anglais).

A cet effet, le turbocompresseur électrique comprend une hélice disposée sur le conduit d'admission en amont du moteur thermique pour permettre de comprimer l'air d'admission afin d'optimiser le remplissage des cylindres du moteur thermique.

La machine électrique est par exemple destinée pour entraîner la turbine de compresseur afin de minimiser le temps de réponse en couple, notamment lors des phases transitoires à l'accélération, ou en phase de redémarrage automatique du moteur thermique après une mise en veille (fonctionnement « stop and start » en anglais).

### Etat de la technique

On connaît de nombreuses topologies de rotors pour des machines électriques de type IPM.

A titre d'exemple, la demande de brevet européen EP0803962 décrit un rotor à aimants permanents d'alternateurs, présentant une multitude de tôles ferromagnétiques superposées en forme de disque, avec des régions découpée à l'emporte-pièce définissant des portions trapézoïdales à base incurvée, séparées par des fentes s'étendant radialement. Dans les fentes s'étendant radialement sont suivis des aimants permanents frittés.

La demande de brevet US2015288233 décrit un rotor formé par un noyau principal cylindrique ayant un diamètre intérieur et un diamètre extérieur présentant des cavités axiales dans lesquelles sont logés des blocs d'aimants radiaux, dont chacun s'étend dans une direction perpendiculaire à un bord de circonférence externe du noyau principal. Ces aimants permanents sont magnétisés de telle sorte que des pôles opposés soient face à face avec le noyau radial centré entre eux.

Des rotors pour une machine électrique à aimant permanents internes similaires sont notamment décrits dans les documents EP0872944 A1, DE102012105992 A1, EP2615724 A2 et US2013/088111 A1.

### Inconvénients de l'art antérieur

Ces solutions ne sont pas totalement satisfaisantes car les performances restent relativement modestes, notamment pour des machines électriques tournant à haute vitesse. Pour de telles machines, il est nécessaire de caler les aimants dans des logements en raison de la force centrifuge élevée qui s'exercent sur les aimants insérés dans les cavités formées dans le rotor. Il n'est toutefois pas possible d'augmenter de manière trop importante les zones de maintien périphériques des rotors, car il s'agit d'isthmes créant un court-circuit magnétique.

Le but de l'invention est d'optimiser les performances magnétiques et mécaniques en maximisant le volume d'aimant et donc la puissance du moteur, tout en limitant les zones de rupture soumises à de fortes contraintes mécaniques lors des rotations à haute vitesse.

### Solution apportée par l'invention

La présente invention a pour objet un rotor pour machine électrique à aimant permanents internes, telle que défini dans la revendication indépendante 1, une machine électrique, telle que défini dans la revendication dépendante 8 et un compresseur électrique, telle que défini dans la revendication dépendante 9.

Préférentiellement, l'objet de l'invention étant de maximiser la section transversale d'aimants, la section transversale cumulée desdits aimants est supérieure à 40% de la section transversale du rotor. La section transversale du rotor est considérée comme la section du rotor comprenant de la matière, y compris un éventuel arbre mécanique inséré.

Préférentiellement, les aimants sont de section rectangulaire. Ils peuvent néanmoins présenter des congés ou des chanfreins à leurs coins.

Alternativement, lesdits aimants sont de section transversale trapézoïdale avec une symétrie par rapport au plan radial, la petite base étant dirigée vers le stator, extérieur au rotor.

Dans un premier mode de réalisation, deux couples d'aimants consécutifs sont séparés par des zones de matière pleines.

Dans un deuxième mode de réalisation, ladite culasse présente des ouvertures entre deux couples d'aimants correspondant aux pôles magnétiques du rotor.

Préférentiellement, lesdits isthmes latéraux sont orientés radialement et à 45° d'angle par rapport à l'isthme radial. L'invention se destine principalement à une machine électrique ayant deux paires de pôles aimantés.

L'invention concerne aussi l'application d'un tel rotor pour la réalisation d'un moteur, notamment d'un moteur pour turbocompresseur, ou une génératrice électrique, comportant un stator présentant des dents polaires dont une partie au moins est entourée par une bobine électrique et un rotor à aimants permanents internes conforme au rotor susvisé.

### Description détaillée d'exemples non limitatifs de l'invention

La présente invention sera mieux comprise à la lecture de la description détaillée d'un exemple non limitatif de l'invention qui suit, se référant aux dessins annexés où :
- les figures 1a et 1b représentent des vues en coupe transversale d'une culasse d'un rotor selon l'invention dans un premier mode de réalisation, respectivement sans et avec aimants,
- les figures 2a et 2b représentent des vues en coupe transversale d'une culasse d'un rotor selon l'invention dans un deuxième mode de réalisation, respectivement sans et avec aimants,
- la figure 3 représente une vue en perspective d'un rotor selon l'invention dans le premier mode de réalisation,
- la figure 4 représente une vue en perspective d'un rotor selon l'invention dans le deuxième mode de réalisation,
- la figure 5 représente une vue en perspective d'un rotor selon l'invention dans un mode alternatif où les aimants sont de section transversale trapézoïdale,
- les figures 6a et 6b des modes de réalisations alternatifs où le diamètre intérieur, pour le passage d'un arbre mécanique, est variable,
- la figure 7 un mode de réalisation alternatif où le stator présente des ergots de positionnement de aimants,
- les figures 8a et 8b des modes de réalisation différents où le profil curviligne, entre deux couples d'aimants consécutifs, est différent.

### Description de la culasse du rotor

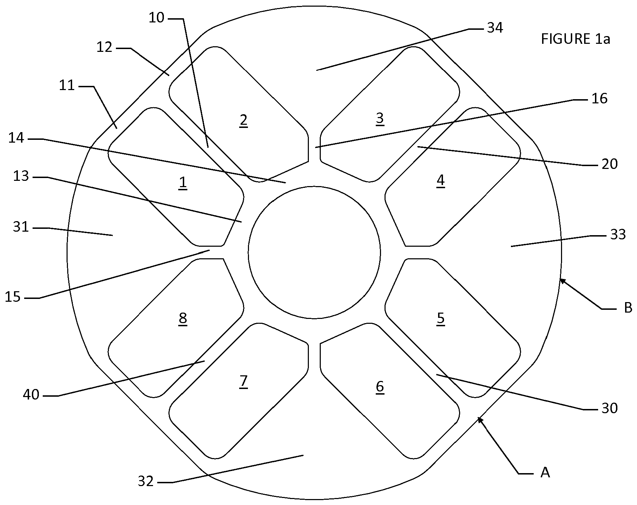

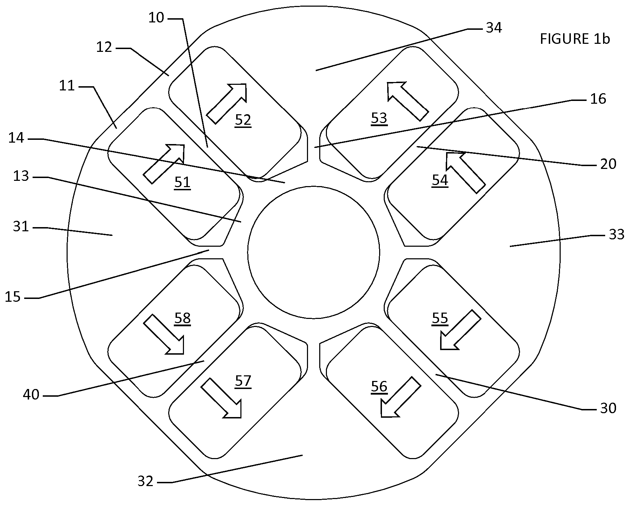

Dans le premier mode de réalisation, la culasse du rotor est constituée par un empilement de tôles d'une épaisseur typique pouvant aller de 0.2 à 0,5 millimètres, sans que cette épaisseur ne soit limitative, découpées pour présenter des logements (1 à 8) formant des couples disposés de part et d'autre d'isthmes (10, 20, 30, 40). Dans l'exemple décrit, le rotor présente quatre couples de découpes. Un couple de logements (1, 2) est séparé par un isthme (10) orienté radialement, d'une épaisseur typique de 0,5 millimètres. Cette épaisseur n'est pas limitative mais il est important, pour l'invention, que cette épaisseur soit minimisée à la possibilité effective de réalisation et de tenue mécanique de la pièce, afin de minimiser la surface occupée par les isthmes (10, 20, 30, 40) relativement à la section du rotor qui est visible en cette figure 1.

Les logements (1 à 8) sont délimités par des isthmes. On entend par le mot « isthme « une bande étroite de matière ferromagnétique, qui assure une fonction de tenue mécanique. Ces isthmes étroits, qui présentent chacun une épaisseur plus réduite que l'épaisseur des autres éléments magnétiques dans le rotor, assurent une tenue mécanique sans dégrader les performances magnétiques.

Un isthme radial (10) s'étend radialement du centre de la culasse du rotor et traverse entre un couple de logements (1, 2). Un isthme transversal extérieur (11, 12) est sensiblement perpendiculaire à l'isthme radial (10) et positionné à côté extérieure du logement (1 à 8). Un isthme oblique (13, 14) se situe à côté intérieure du logement (1 à 8) entre le logement et le centre de la culasse du rotor. Un isthme latéral (15, 16) est positionné entre des logements adjacents de chaque couple de logement et lie des zones de matière (31 à 34) et le centre de la culasse du rotor. Les isthmes transversaux extérieurs (11, 12) et les isthmes latéraux (15hh, 16) sont saturés magnétiquement, tandis que les isthmes radiaux (10, 20) et les isthmes obliques (13, 14) sont des bandes de matière sans saturation magnétique.

Donc, un couple des logements (1, 2) sont délimitées du côté extérieure par des isthmes transversaux extérieurs (11, 12) et du coté intérieur par des isthmes obliques (13, 14). De plus, le couple des logements (1, 2) sont délimités par deux isthmes latéraux (15, 16) orientés radialement et à 45° d'angle par rapport à l'isthme radial (10).

Dans ce premier mode de réalisation montré en figures 1a et 1b, les zones de matière (31, 32, 33, 34) comprises entre deux couples de découpes sont pleines et non ouvertes.

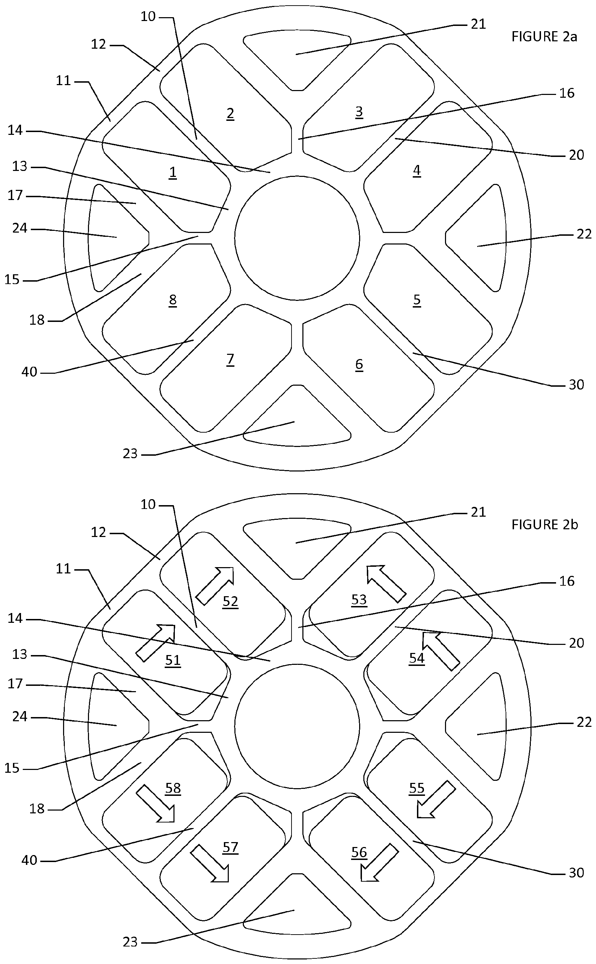

Dans le deuxième exemple de réalisation en figures 2a et 2b, les zones sont évidées pour former des ouvertures (21 à 24) permettant un allégement du rotor (diminution de l'inertie) et la diminution des contraintes mécaniques s'appliquant notamment aux isthmes latéraux (15, 16) lors de la rotation à haute vitesse.

Toujours dans ce deuxième mode de réalisation, l'ouverture (24) définit deux segments (17, 18) s'étendant parallèlement à l'isthme (10) et reliant l'extrémité extérieur du bord (15) à l'extrémité de isthme transversal extérieur (11). Ces ouvertures (21 à 24), assurent ainsi la cohésion mécanique de la culasse, ne rompant pas la continuité de matière de chaque tôle de la culasse afin de former, pour chaque tôle utilisée, un élément unitaire solide.

L'épaisseur des segments (17, 18) est typiquement supérieure à celle des isthmes latéraux (15, 16), des isthmes transversaux extérieures (11, 12) et des isthmes radiaux (10), typiquement d'un facteur 2 à 4, afin de favoriser un passage de flux magnétique suffisant à éviter une saturation magnétique marquée de la matière de la culasse.

Les isthmes transversaux extérieurs (11, 12) ont une orientation orthogonale à l'isthme radial (10) de manière à former une forme de T caractéristique, conférant une circonférence non circulaire mais composée de successions de profils curvilignes (B), entre les segments (17, 18), et de profils linéaires (A) à direction tangente, au niveau des isthmes transversaux extérieurs (11, 12).

Les profils curvilignes (B) sont préférentiellement circulaires mais ils peuvent être déformés localement pour ajuster le couple résiduel sans courant ou sculpter la forme de la force contre-électromotrice de la machine.

Les profils linéaires (A) traduisent le fait que les isthmes transversaux extérieurs (11, 12) présentent une épaisseur globalement constante. De faibles variations d'épaisseur et donc de linéarité sont permises par l'invention, là encore dans le but d'ajuster le couple résiduel sans courant ou sculpter la forme de la force contre-électromotrice de la machine, ou encore de permettre des fonctions d'assemblages et/ou de positionnements des aimants.

Les figures 1b et 2b présentent respectivement les premier et deuxième modes de réalisation avec les aimants (51 à 58) placés dans les logements (1 à 8). Typiquement les aimants (51 à 58) se positionnent, du fait de l'aimantation dont la direction est appréciée en figure 1b et 2b par les flèches épaisses et du fait de la force centrifuge pendant le fonctionnement, tels qu'ils sont en contact avec l'isthme radial (10) et avec les isthmes transversaux extérieures (11, 12). Les aimants permanents (51 à 58) sont typiquement sous la forme de blocs à section parallélépipédique, par exemple rectangulaire avec des congés -comme montrés ici- ou des chanfreins (non montrés), sans que la forme de la périphérie ne soit limitative.

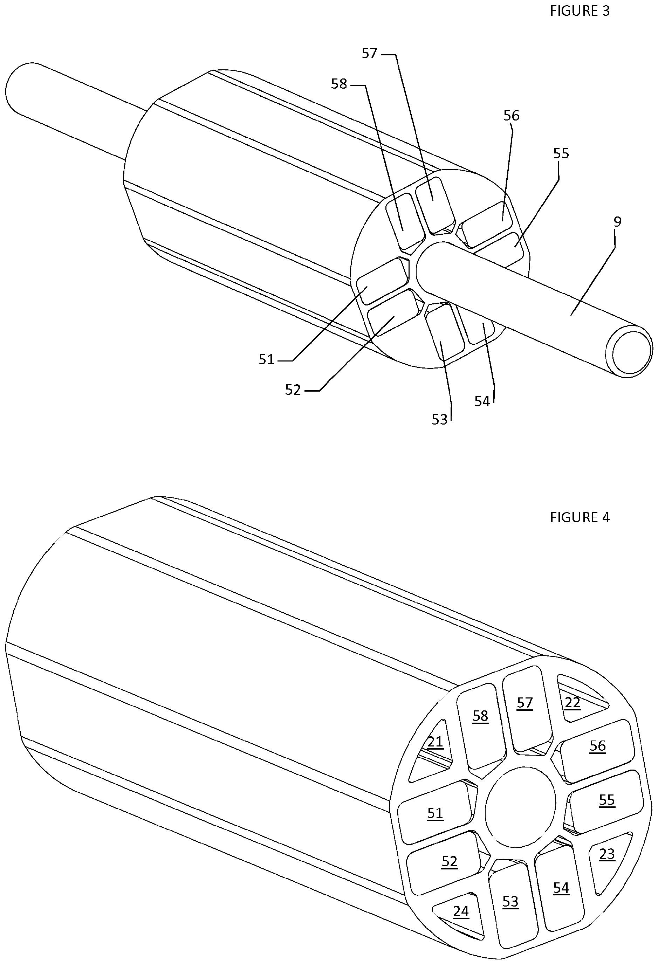

La figure 3 représente une vue en perspective d'un rotor selon l'invention dans le premier mode de réalisation, formé d'une culasse telle que décrite en figure 1b, et d'un arbre mécanique (9) de liaison à un élément externe à déplacer, par exemple une turbine dans le cas d'application à un turbocompresseur électrique. Dans chaque couple de logements (1, 2) sont logés des aimants (51 à 58) aimantés selon une direction perpendiculaire au plan de l'isthme (10) radial, c'est-à-dire une direction tangentielle, séparant les deux logements (1, 2). La direction d'aimantation pourra cependant s'écarter suivant quelques degrés de la direction tangente afin d'ajuster le couple résiduel et la force contre-électromotrice de la machine.

La figure 4 représente une vue en perspective d'un rotor formé d'une culasse telle que décrite dans le deuxième mode de réalisation en figure 2b avec aimants (51 à 58) montés. La culasse est formée d'un empilage de tôles, non visibles ici pour raison de clarté.

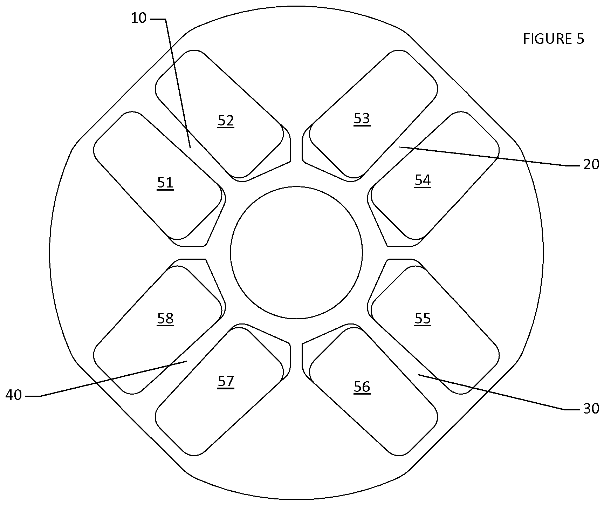

La figure 5 montre une réalisation alternative du rotor pour laquelle lesdits aimants (51 à 58) sont de section transversale trapézoïdale avec une symétrie par rapport au plan radial (10, 20, 30, 40), la petite base étant dirigée vers le stator. Cette forme d'aimant peut être avantageuse dans le but d'améliorer la tenue des aimants et la résistance mécanique du rotor.

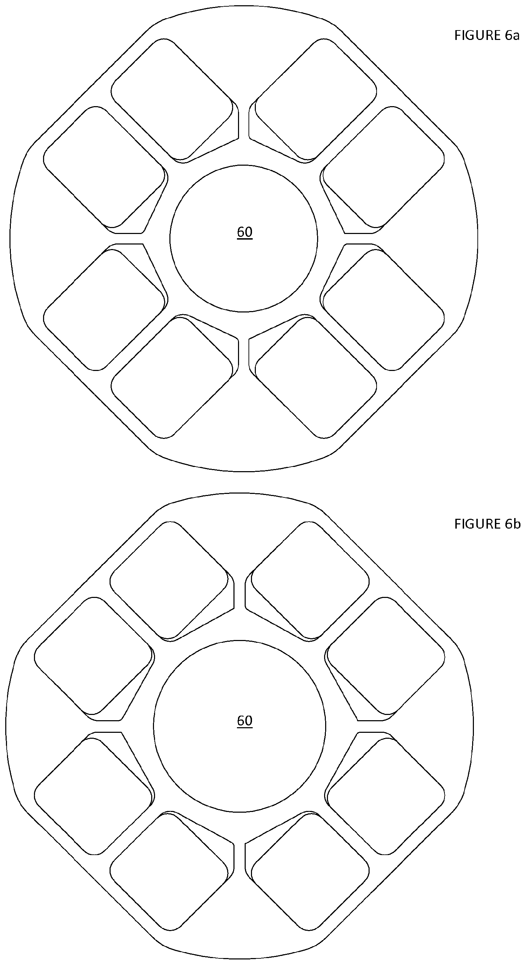

Les figures 6a et 6b montrent des cas de réalisation où l'espace central (60), qui sert à accueillir un arbre mécanique pour la transmission de la puissance de la machine électrique est de taille différente.

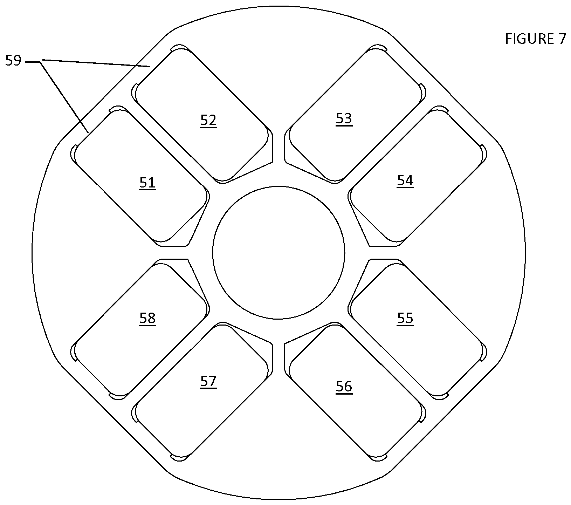

La figure 7 présent un mode de réalisation qui utilise des ergots de positionnement (59) afin de garantir le contact des aimants (51 à 58) sur le fond radial des logements (1 à 8).

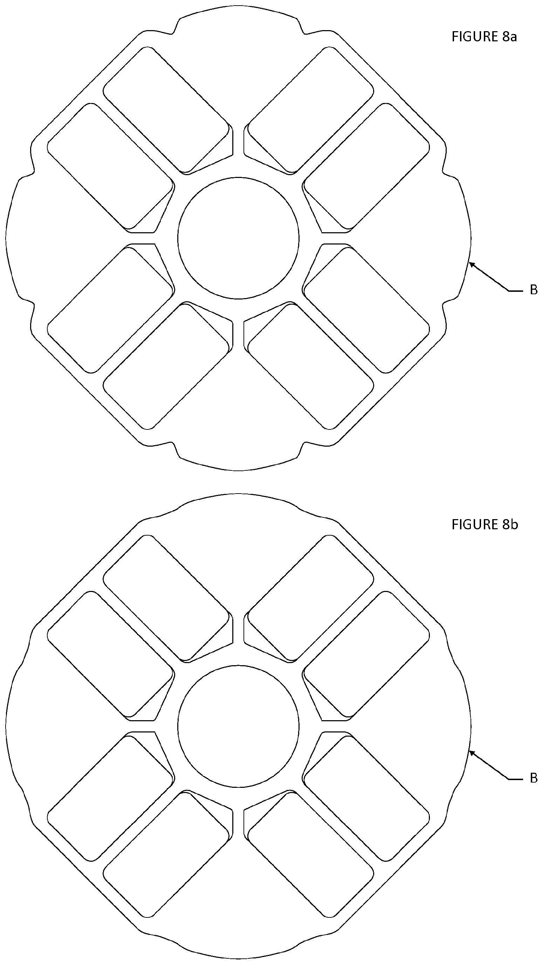

En figures 8a et 8b sont présentées des variantes de réalisation où les profils curvilignes (B), entre deux couples d'aimants consécutifs, sont variables afin de gérer les couples sans courant et avec courant. La modification de ces profils peut être menée à bien par essais itératifs.

## Revendications

1. - Rotor pour machine électrique à aimants permanents internes comprenant une culasse réalisée par un empilement de tôles définissant une pluralité de logements (1 à 8) pour recevoir des aimants permanents parallélépipédiques (51 à 58), lesdits logements (1 à 8) formant des couples et étant entourés par des isthmes transversaux extérieurs (11, 12) et des isthmes latéraux (15, 16) saturés magnétiquement, et par des isthmes radiaux (10, 20, 30, 40), et des isthmes obliques (13, 14), **caractérisé en ce que** chaque :
- isthme radial (10, 20, 30, 40) s'étend radialement du centre de la culasse du rotor et traverse entre un couple de logements (1 à 8);
- isthme transversal extérieur (11, 12) est perpendiculaire à l'isthme radial (10, 20, 30, 40) et positionné du côté extérieure du logement (1 à 8) ;
- isthme oblique (13, 14) se situe du côté intérieure du logement (1 à 8) entre le logement (1 à 8) et le centre de la culasse du rotor ;
- isthme latéral (15, 16) est positionné entre des logements (1 à 8) adjacents de chaque couple de logements (1 à 8) et lie des zones de matière et le centre de la culasse du rotor ;
- lesdits aimants permanents parallélépipédiques (51 à 58) sont assemblés par couples, chaque couple d'aimants permanents parallélépipédiques (51, 52) aimantés dans la même direction et perpendiculairement à la direction radiale des isthmes radiaux (10, 20, 30, 40) disposés entre lesdits aimants permanents parallélépipédiques (51 à 58) accouplés,
- lesdits isthmes radiaux (10, 20, 30, 40) présentant une épaisseur inférieure à 5% du diamètre du rotor,
- et **en ce que** la périphérie de la section transversale du rotor est formée d'une succession de profils curvilignes (B) et de profils linéaires (A), chaque profil curviligne (B) étant formé entre deux couples d'aimants permanents parallélépipédiques (51, 52) consécutifs, chaque profil linéaire (A) à direction tangente délimitant deux isthmes transversaux extérieurs (11, 12) d'un couple de logements (1 à 8) consécutifs.

2. - Rotor selon la revendication 1 **caractérisé en ce que** la section transversale cumulée des dits aimants permanents parallélépipédiques (51 à 58) est supérieure à 40% de la section transversale du rotor.

3. - Rotor selon la revendication 1 **caractérisé en ce que** lesdits aimants permanents parallélépipédiques (51 à 58) sont de section rectangulaire.

4. - Rotor selon la revendication 1 **caractérisé en ce que** lesdits aimants permanents parallélépipédiques (51 à 58) sont de section transversale trapézoïdale avec une symétrie par rapport au plan radial (10, 20, 30, 40), la petite base étant dirigée vers le stator.

5. - Rotor selon la revendication 1 **caractérisé en ce que** ladite culasse présente des ouvertures (21 à 24) entre deux couples d'aimants permanents parallélépipédiques (51, 52) correspondant aux pôles magnétiques du rotor.

6. - Rotor selon la revendication 1 **caractérisé en ce que** lesdits isthmes latéraux (15, 16) sont orientés radialement et à 45° d'angle par rapport à l'isthme radial (10).

7. - Rotor selon la revendication 1 **caractérisé en ce que** deux couples d'aimants permanents parallélépipédiques (51, 52) consécutifs sont séparés par des zones de matière pleines (31, 32, 33, 34).

8. - Machine électrique comportant un stator présentant des dents polaires dont une partie au moins est entourée par une bobine électrique et un rotor à aimants permanents internes selon une des revendications 1 à 7, comprenant une culasse réalisée par un empilement de tôles définissant une pluralité de logements (1 à 8) pour recevoir des aimants permanents parallélépipédiques (51 à 58), lesdits logements (1 à 8) étant entourés par des isthmes transversaux extérieurs (11, 12) saturés magnétiquement, par des isthmes radiaux (10, 20, 30, 40), des isthmes latéraux (15, 16) et des isthmes obliques (13, 14) **caractérisée en ce que** :
- lesdits aimants permanents parallélépipédiques (51 à 58) sont assemblés par couples d'aimants permanents parallélépipédiques (51, 52) aimantés dans la même direction et perpendiculairement à la direction radiale des isthmes radiaux (10, 20, 30, 40) disposés entre lesdits aimants permanents parallélépipédiques (51, 52) accouplés,
- lesdits isthmes radiaux (10, 20, 30, 40) présentant une épaisseur inférieure à 5% du diamètre du rotor,
- et **en ce que** la périphérie de la section transversale du rotor est formée d'une succession de profils curvilignes (B) et de profils linéaires (A), chaque profil curviligne (B) étant formé entre deux couples d'aimants permanents parallélépipédiques (51 à 58) consécutifs, chaque de profils linéaires (A) à direction tangente délimitant deux isthmes transversaux extérieurs (11,12) d'un couple de logements (1 à 8) consécutifs.

9. - Compresseur électrique comprenant une turbine entraînée par un moteur comportant un stator présentant des dents polaires dont une partie au moins est entourée par une bobine électrique et un rotor à aimants permanents internes selon une des revendications 1 à 7, comprenant une culasse réalisée par un empilement de tôles définissant une pluralité de logements (1 à 8) pour recevoir des aimants permanents parallélépipédiques (51 à 58), lesdits logements (1 à 8) étant entourés par des isthmes transversaux extérieurs (11, 12) saturés magnétiquement, par des isthmes radiaux (10, 20, 30, 40), des isthmes latéraux (15, 16) et des isthmes obliques (13, 14) **caractérisé en ce que** :
- lesdits aimants permanents parallélépipédiques (51 à 58) sont assemblés par couples d'aimants permanents parallélépipédiques (51, 52) aimantés dans la même direction et perpendiculairement à la direction radiale des isthmes radiaux (10, 20, 30, 40) disposés entre lesdits aimants permanents parallélépipédiques (51, 52) accouplés,
- lesdits isthmes radiaux (10, 20, 30, 40) présentant une épaisseur inférieure à 5% du diamètre du rotor,
- et **en ce que** la périphérie de la section transversale du rotor est formée d'une succession de profils curvilignes (B) et de profils linéaires (A), chaque profil curviligne (B) étant formé entre deux couples d'aimants consécutifs, chaque profils linéaires (A) à direction tangente délimitant deux isthmes transversaux extérieurs (11,12) d'un couple de logements (1 à 8) consécutifs.

## Patentansprüche

1. Rotor für eine elektrische Maschine mit internen Permanentmagneten, umfassend ein Joch, das aus einem Stapel von Blechen hergestellt ist, die eine Vielzahl von Aufnahmen (1 bis 8) zum Empfangen von quaderförmigen Permanentmagneten (51 bis 58) definieren, wobei die Aufnahmen (1 bis 8) Paare ausbilden und durch äußere transversale Isthmen (11, 12) und magnetisch gesättigte seitliche Isthmen (15, 16) und durch radiale Isthmen (10, 20, 30, 40) und ungleichseitige Isthmen (13, 14) umgeben sind,
**dadurch gekennzeichnet, dass** jeder:
- radiale Isthmus (10, 20, 30, 40) sich von der Mitte des Jochs des Rotors radial erstreckt und zwischen einem Paar von Aufnahmen (1 bis 8) verläuft;
- äußere transversale Isthmus (11, 12) senkrecht zu dem radialen Isthmus (10, 20, 30, 40) ist und an der Außenseite der Aufnahme (1 bis 8) positioniert ist;
- ungleichseitige Isthmus (13, 14) sich auf der Innenseite der Aufnahme (1 bis 8) zwischen der Aufnahme (1 bis 8) und der Mitte des Jochs des Rotors befindet;
- seitliche Isthmus (15, 16) zwischen benachbarten Aufnahmen (1 bis 8) jedes Paars von Aufnahmen (1 bis 8) positioniert ist und die Materialbereiche und die Mitte des Jochs des Rotors verbindet;
- wobei die quaderförmigen Permanentmagnete (51 bis 58) in Paaren zusammengesetzt sind, wobei jedes Paar von quaderförmigen Permanentmagneten (51, 52) in der gleichen Richtung und senkrecht zu der radialen Richtung der radialen Isthmen (10, 20, 30, 40) magnetisiert ist, die zwischen den gepaarten quaderförmigen Permanentmagneten (51 bis 58) angeordnet sind,
- wobei die radialen Isthmen (10, 20, 30, 40) eine Dicke von weniger als 5 % des Durchmessers des Rotors aufweisen,
- und **dass** der Umfang des Querschnitts des Rotors aus einer Folge von gekrümmten Profilen (B) und linearen Profilen (A) ausgebildet ist, wobei jedes gekrümmte Profil (B) zwischen zwei aufeinanderfolgenden Paaren von quaderförmigen Permanentmagneten (51, 52) ausgebildet ist, wobei jedes lineare Profil (A) mit tangentialer Richtung zwei äußere transversale Isthmen (11, 12) eines Paars von aufeinanderfolgenden Aufnahmen (1 bis 8) begrenzt.

2. Rotor nach Anspruch 1, **dadurch gekennzeichnet, dass** der kumulierte Querschnitt der quaderförmigen Permanentmagnete (51 bis 58) mehr als 40 % des Querschnitts des Rotors beträgt.

3. Rotor nach Anspruch 1, **dadurch gekennzeichnet, dass** die quaderförmigen Permanentmagnete (51 bis 58) einen rechteckigen Querschnitt besitzen.

4. Rotor nach Anspruch 1, **dadurch gekennzeichnet, dass** die quaderförmigen Permanentmagnete (51 bis 58) einen trapezförmigen Querschnitt mit einer Symmetrie bezüglich der radialen Ebene (10, 20, 30, 40) besitzen, wobei die kleine Basis zu dem Stator hin gerichtet ist.

5. Rotor nach Anspruch 1, **dadurch gekennzeichnet, dass** das Joch Öffnungen (21 bis 24) zwischen zwei Paaren von quaderförmigen Permanentmagneten (51, 52) aufweist, die den magnetischen Polen des Rotors entsprechen.

6. Rotor nach Anspruch 1, **dadurch gekennzeichnet, dass** die seitlichen Isthmen (15, 16) radial und in einem Winkel von 45° bezüglich des radialen Isthmus (10) ausgerichtet sind.

7. Rotor nach Anspruch 1, **dadurch gekennzeichnet, dass** zwei aufeinanderfolgende Paare von quaderförmigen Permanentmagneten (51, 52) durch massive Materialbereiche (31, 32, 33, 34) getrennt sind.

8. Elektrische Maschine, die einen Stator, der Polzähne aufweist, von denen ein Teil mindestens durch eine elektrische Spule umgeben ist, und einen Rotor mit inneren Permanentmagneten nach einem der Ansprüche 1 bis 7 vorweist, umfassend ein Joch, das aus einem Stapel von Blechen hergestellt ist, die eine Vielzahl von Aufnahmen (1 bis 8) zum Empfangen von quaderförmigen Permanentmagneten (51 bis 58) definieren, wobei die Aufnahmen (1 bis 8) durch magnetisch gesättigte äußere transversale Isthmen (11, 12), durch radiale Isthmen (10, 20, 30, 40), seitliche Isthmen (15, 16) und ungleichseitige Isthmen (13, 14) umgeben sind, **dadurch gekennzeichnet, dass:**
- die quaderförmigen Permanentmagnete (51 bis 58) in Paaren von quaderförmigen Permanentmagneten (51, 52) zusammengesetzt sind, die in der gleichen Richtung und senkrecht zu der radialen Richtung der radialen Isthmen (10, 20, 30, 40) magnetisiert sind, die zwischen den gepaarten quaderförmigen Permanentmagneten (51, 52) angeordnet sind,
- die radialen Isthmen (10, 20, 30, 40) eine Dicke von weniger als 5 % des Durchmessers des Rotors aufweisen,
- und **dass** der Umfang des Querschnitts des Rotors aus einer Folge von gekrümmten Profilen (B) und linearen Profilen (A) ausgebildet ist, wobei jedes gekrümmte Profil (B) zwischen zwei aufeinanderfolgenden Paaren von quaderförmigen Permanentmagneten (51 bis 58) ausgebildet ist, wobei jedes der linearen Profile (A) mit tangentialer Richtung zwei äußere transversale Isthmen (11, 12) eines Paars von aufeinanderfolgenden Aufnahmen (1 bis 8) begrenzt.

9. Elektrischer Kompressor, umfassend eine Turbine, die durch einen Motor angetrieben wird, der einen Stator, der Polzähne aufweist, von denen mindestens ein Teil durch eine elektrische Spule umgeben ist, und einen Rotor mit inneren Permanentmagneten nach einem der Ansprüche 1 bis 7 vorweist, umfassend ein Joch, das aus einem Stapel von Blechen hergestellt ist, die eine Vielzahl von Aufnahmen (1 bis 8) zum Empfangen von quaderförmigen Permanentmagneten (51 bis 58) definieren, wobei die Aufnahmen (1 bis 8) durch magnetisch gesättigte äußere transversale Isthmen (11, 12), durch radiale Isthmen (10, 20, 30, 40), seitliche Isthmen (15, 16) und ungleichseitige Isthmen (13, 14) umgeben sind, **dadurch gekennzeichnet, dass:**
- die quaderförmigen Permanentmagnete (51 bis 58) in Paaren von quaderförmigen Permanentmagneten (51, 52) zusammengesetzt sind, die in der gleichen Richtung und senkrecht zu der radialen Richtung der radialen Isthmen (10, 20, 30, 40) magnetisiert sind, die zwischen den gepaarten quaderförmigen Permanentmagneten (51, 52) angeordnet sind,
- die radialen Isthmen (10, 20, 30, 40) eine Dicke von weniger als 5 % des Durchmessers des Rotors aufweisen,
- und **dass** der Umfang des Querschnitts des Rotors aus einer Folge von gekrümmten Profilen (B) und linearen Profilen (A) ausgebildet ist, wobei jedes gekrümmte Profil (B) zwischen zwei aufeinanderfolgenden Magnetpaaren ausgebildet wird, wobei jedes der linearen Profile (A) mit tangentialer Richtung zwei äußere transversale Isthmen (11, 12) eines Paares von aufeinanderfolgenden Aufnahmen (1 bis 8) begrenzt.

## Claims

1. Rotor for an electric machine having internal permanent magnets, comprising a yoke formed by a stack of sheets defining a plurality of recesses (1 to 8) for receiving parallelepipedal permanent magnets (51 to 58), said recesses (1 to 8) forming pairs and being surrounded by magnetically saturated outer transverse isthmuses (11, 12) and lateral isthmuses (15, 16), and by radial isthmuses (10, 20, 30, 40) and oblique isthmuses (13, 14), **characterized in that** each:
- radial isthmus (10, 20, 30, 40) extends radially from the center of the yoke of the rotor and passes between a pair of recesses (1 to 8);
- outer transverse isthmus (11, 12) is perpendicular to the radial isthmus (10, 20, 30, 40) and positioned on the outer side of the recess (1 to 8);
- oblique isthmus (13, 14) is located on the inner side of the recess (1 to 8) between the recess (1 to 8) and the center of the yoke of the rotor;
- lateral isthmus (15, 16) is positioned between adjacent recesses (1 to 8) of each pair of recesses (1 to 8) and connects materials areas and the center of the yoke of the rotor;
- said parallelepipedal permanent magnets (51 to 58) are assembled in pairs, each pair of parallelepipedal permanent magnets (51, 52) being magnetized in the same direction and perpendicularly to the radial direction of the radial isthmuses (10, 20, 30, 40) arranged between said paired parallelepipedal permanent magnets (51 to 58),
- said radial isthmuses (10, 20, 30, 40) having a thickness of less than 5% of the diameter of the rotor,
- and **in that** the periphery of the cross-section of the rotor is formed by a succession of curvilinear profiles (B) and linear profiles (A), each curvilinear profile (B) being formed between two consecutive pairs of parallelepipedal permanent magnets (51, 52), each linear profile (A), having a tangent direction, delimiting two outer transverse isthmuses (11, 12) of a pair of consecutive recesses (1 to 8).

2. Rotor according to claim 1, **characterized in that** the cumulative cross-section of said parallelepipedal permanent magnets (51 to 58) is greater than 40% of the cross-section of the rotor.

3. - Rotor according to claim 1, **characterized in that** said parallelepipedal permanent magnets (51 to 58) are rectangular in cross-section.

4. Rotor according to claim 1, **characterized in that** said parallelepipedal permanent magnets (51 to 58) have a trapezoidal cross-section with symmetry with respect to the radial plane (10, 20, 30, 40), the small base being directed toward the stator.

5. Rotor according to claim 1, **characterized in that** said yoke has openings (21 to 24) between two pairs of parallelepipedal permanent magnets (51, 52) corresponding to the magnetic poles of the rotor.

6. Rotor according to claim 1, **characterized in that** said lateral isthmuses (15, 16) are oriented radially and at a 45° angle with respect to the radial isthmus (10).

7. Rotor according to claim 1, **characterized in that** two consecutive pairs of parallelepipedal permanent magnets (51, 52) are separated by solid material regions (31, 32, 33, 34).

8. Electric machine comprising a stator having polar teeth, at least part of which is surrounded by an electric coil, and a rotor having internal permanent magnets according to any of claims 1 to 7, comprising a yoke formed by a stack of sheets defining a plurality of recesses (1 to 8) for receiving parallelepipedal permanent magnets (51 to 58), said recesses (1 to 8) being surrounded by magnetically saturated outer transverse isthmuses (11, 12), by radial isthmuses (10, 20, 30, 40), lateral isthmuses (15, 16) and oblique isthmuses (13, 14), **characterized in that:**
- said parallelepipedal permanent magnets (51 to 58) are assembled in pairs of parallelepipedal permanent magnets (51, 52) which are magnetized in the same direction and perpendicularly to the radial direction of the radial isthmuses (10, 20, 30, 40) arranged between said paired parallelepipedal permanent magnets (51, 52),
- said radial isthmuses (10, 20, 30, 40) having a thickness of less than 5% of the diameter of the rotor,
- and **in that** the periphery of the cross-section of the rotor is formed by a succession of curvilinear profiles (B) and linear profiles (A), each curvilinear profile (B) being formed between two consecutive pairs of parallelepipedal permanent magnets (51 to 58), each linear profiles (A), having a tangent direction, delimiting two outer transverse isthmuses (11,12) of a pair of consecutive recesses (1 to 8).

9. Electrical compressor comprising a turbine driven by a motor including a stator having polar teeth, at least part of which is surrounded by an electric coil, and a rotor having internal permanent magnets according to any of claims 1 to 7, comprising a yoke formed by a stack of sheets defining a plurality of recesses (1 to 8) for receiving parallelepipedal permanent magnets (51 to 58), said recesses (1 to 8) being surrounded by magnetically saturated outer transverse isthmuses (11, 12), by radial isthmuses (10, 20, 30, 40), lateral isthmuses (15, 16) and oblique isthmuses (13, 14), **characterized in that:**
- said parallelepipedal permanent magnets (51 to 58) are assembled in pairs of parallelepipedal permanent magnets (51, 52) which are magnetized in the same direction and perpendicularly to the radial direction of the radial isthmuses (10, 20, 30, 40) arranged between said paired parallelepipedal permanent magnets (51, 52),
- said radial isthmuses (10, 20, 30, 40) having a thickness of less than 5% of the diameter of the rotor,
- and **in that** the periphery of the cross-section of the rotor is formed by a succession of curvilinear profiles (B) and linear profiles (A), each curvilinear profile (B) being formed between two pairs of consecutive magnets, each linear profiles (A), having a tangent direction, delimiting two outer transverse isthmuses (11,12) of a pair of consecutive recesses (1 to 8).
